# EUROPEAN PATENT SPECIFICATION

(11) **EP 1 092 645 B1**
(45) Date of publication and mention of the grant of the patent: **10.03.2004**
(21) Application number: 00308970.3
(22) Date of filing: 12.10.2000
(51) Int. Cl.: B65D 75/54, A45C 11/00, G02B 25/00

(54) **Primary package for contact lens**
Primärverpackung für Kontaktlinsen
Emballage primaire pour lentilles de contact

(30) Priority: 13.10.1999 US 417617
(43) Date of publication of application: 18.04.2001
(73) Proprietor: Johson & Johnson Vision Care Inc., Jacksonville, FL 32256 (US)
(72) Inventor: Litwin, Michael W., Jacksonville, FL 32221 (US); Roffman, Jeffrey H., Jacksonville, FL 32259 (US); Gailmard, Neil, Munster, Indiana 463321 (US); Wu, Jongliang, Taipei (TW)
(74) Representative: Mercer, Christopher Paul

(56) References cited:
- EP-A- 1 185 185
- DE-A- 19 701 574
- US-A- 4 044 889
- US-A- 4 784 258
- US-A- 5 609 246
- US-A- 6 092 646

## Description

### Field of the Invention

This invention relates to a primary package for a contact lens. More particularly, this invention relates to a disposable primary package which provides lens handling assistance. Further, this invention describes a method for making the primary package of this invention.

### Background of the Invention

Contact lenses particularly disposable contact lenses are conventionally packaged in blister packages. Blister packs or packages typically consist of two pieces: a base and a cover. The base is an injection-molded plastic which typically has a bowl-shaped, or rectangular-shaped recess for receiving the contact lens. The cover is a laminate material which typically consists of a laminate of an aluminum foil and polypropylene. Within each blister pack is a single contact lens and enough solution to prevent drying of the contact lens and to maintain the contact lens ready for use. The contact lens user tears the cover from the base, removes the lens, and inserts the lens into his or her eye. The cover and the base are then disposed of.

Contact lenses are designed with a front surface and a back surface and some contact lens designs also have a top and a bottom (rotationally oriented). The use of identifying indicium or indicia on contact lenses has been disclosed in the prior art, such as in U.S. 4,525,044, and 5,467,149 to identify to the contact lens user which surfaces are the front and back and/or the proper orientation of the lens. Contact lens manufacturers try to make the identifying indicia big enough to be seen by the contact lens wearer; however, for identifying indicia which are molded into the lens surface, the identifying indicia have to be small enough so that it does not irritate the eye or the eyelid.
Also identifying indicia must be small enough so that the identifying indicia are not noticeable when the contact lens is being worn. Therefore, the identifying indicia must be small; however, the small identifying indicia are hard to see when it is time to properly place the contact lens in the eyes. Contact lens users need the contact lenses to improve their vision; therefore, the contact lens users may need their glasses or another vision correction device to be able to see the identifying indicia for proper orientation of the contact lens on the eye.

It is known to put lenses on contact lens storage containers to help the wearers of contact lenses that are not disposable (see US-A-4 784 258); however, there is nothing to help the wearer of disposable contact lenses purchased in disposable contact lens containers as shown in US-A-5 609 246. This invention addresses this need.

### Summary of the Invention

This invention provides a non-resealable, disposable package for housing a contact lens, said package comprising a base and a flange and characterised by a magnifying lens wherein said magnifying lens is part of said flange, and is formed during injection-moulding said base and said flange, said base, said flange and said magnifying lens comprising the same injection-moulded material.

This invention further provides a method of making a non-resealable, disposable package for housing a contact lens comprising the step of injection-moulding a material to form at least a base and a flange of said package in a mould form which provides for the formation of a moulded magnifying lens in said moulded flange of said package.

This invention provides an economical way to provide a magnifying lens as part of a disposable package which is helpful to the contact lens user particularly when the contact lens has an identifying indicium or indicia.

### Brief Description of the Drawings

Figure 1 is a perspective view of a base of the package of this invention.
Figure 2 is a side view of a package of an alternative embodiment which is not part of the invention.
Figure 3 is a perspective view of a package of an alternative embodiment which is not part of the invention.

### Detailed Description of the Preferred Embodiments of the Invention

This invention provides a non-resealable, disposable package for housing a contact lens, said package comprising a magnifying lens. The package can take any form. In the preferred embodiment, the package is a blister pack, preferably comprising a base and a cover.

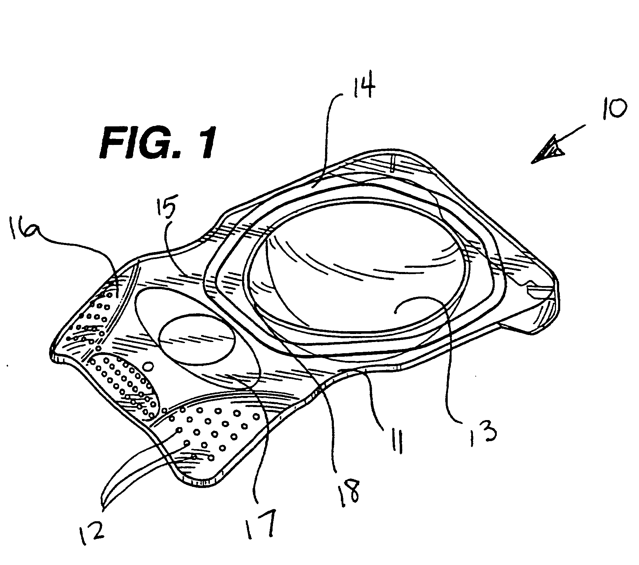

Figure 1 shows a perspective view of a base 11 of a package 10 of this invention. The package preferably houses a contact lens and solution, neither of which are shown, but can be any kind, many of which are commercially available or are disclosed in the prior art. Also not shown is the cover. The cover can comprise any type of cover, preferably a peelable lidstock layer comprising a laminate material. Covers of this type are disclosed in the prior art. The preferred laminate comprises a metal foil layer and at least one, preferably two polymer layers, e.g. polypropylene, coating the foil. The preferred foil is aluminum. Examples of useful covers are described in US Patent 4,691,820.

Referring to Figure 1, the base 11 is shown having a recess 13 for receiving the contact lens and solution. The base 11 also has a flange 15 preferably contiguous to the opening of the recess 13, which is extended on one side from the recess 13, to provide an area for a magnifying lens 17 and a grip region 16, shown having raised bumps 12. The flange preferably extends from 5 millimeters (mm) to 40 mm from the front edge 18 of the recess 13. The flange 15 preferably has a heat seal area 14 preferably raised from the surface of the flange 15. The cover (not shown) is preferably attached to the base 11 by heat-sealing in the seal area 14; however, induction-sealing, ultrasonic welding or another bonding system can be used to attach the cover to the base 11. The overall dimensions of the base are approximately from 2 to 4 centimeters (cm) wide, and from 4 to 7 cm long and from 0.5 to 1.0 cm high. However, the base can have any shape or size as long as the package, and preferably the base comprises a magnifying lens. In an alternative embodiment that is not shown, the magnifying lens could be added to a curved area of the flange.

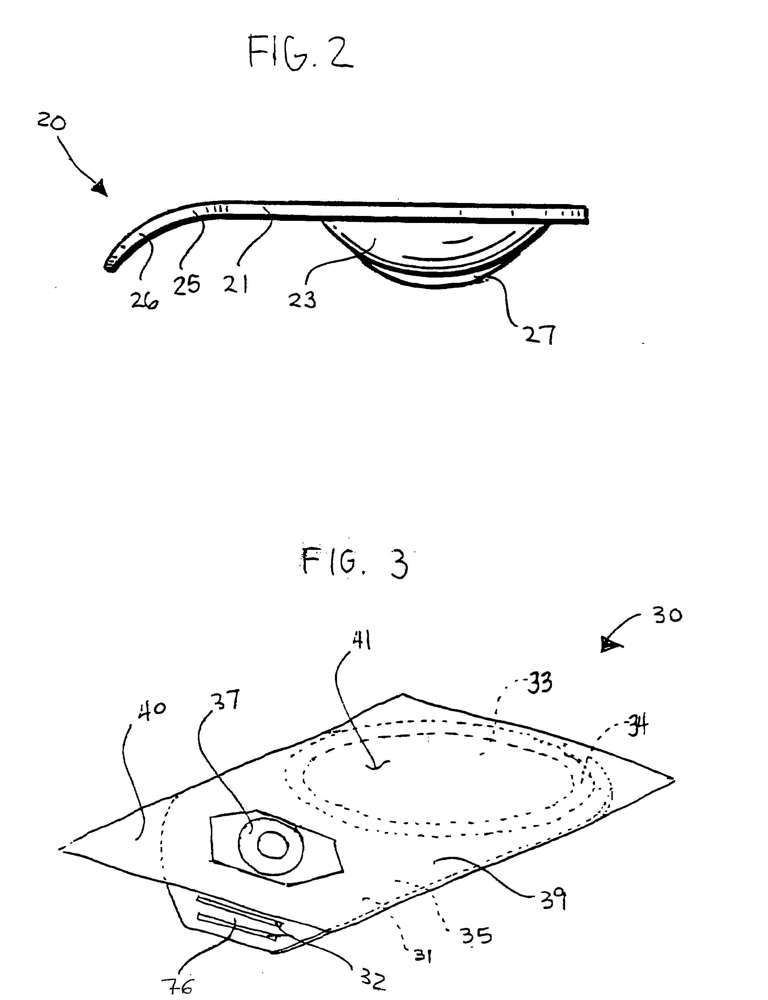

Alternatively ,but not in conformity with the present invention, Figure 2 shows a base where the magnifying lens is added to the curved bottom of the recess of a base. In this area, the magnifying lens can be designed to provide additional benefits, for example, to assist contact lens inspection in the package for defects or to assist for checking a package for the presence of a contact lens.

Figure 2 shows a portion of a package 20. Figure 2 shows a base 21 of a package. The cover is not shown. The base 21 has a different shape from the shape of the base 11 shown in Figure 1; however, the similar elements of Figures 1 and 2 are labeled similarly. Most notably, in this embodiment, base 21 differs from base 11 in that the magnifying lens 27 of base 21 is located as a portion of the recess 23. As shown, a single curve magnifying lens is best suited for this embodiment.

The base of the package preferably comprises a plastic material which can be formed by injection molding or thermoforming. The plastic material used to make the base can be amorphous or semi-crystalline. The preferred base material is polypropylene, but can comprise other similar plastic materials, such as, other polyalkylenes, e.g. polyethylene, and polybutylene; polyesters, e.g. PET; polycarbonates; polystyrene, or other thermoplastic materials or copolymers of thermoplastic materials. It is preferred that the base material, particularly in the recess, has a vapor transmission of less than 15 grams/100 square inches (645 square centimeters)/24 hours at 70° F (21,1°C) and 50 percent relative humidity. It is preferred that the thickness of the materials of the base is approximately 2 mm or less. The same material is used to make the base and the magnifying lens which is part of the base, and the magnifying lens is integral and/or contiguous to the base.

The magnifying lens of the base, preferably has a thickness of 2 mm or less depending on the clarity of the material used to make the magnifying lens and/or the base. The material used to make the magnifying lens is preferably transparent; however, if the magnifying lens is thin, for example, less than 0.5 mm, a material that might otherwise be translucent at greater thicknesses can be used to form the magnifying lens. For example, the preferred material to form the base is polypropylene; however, polypropylene becomes milky when thicker than 1 mm. Attempts to make a single curve magnifying lens which provided sufficient power using polypropylene resulted in a milky, unclear magnifying lens at a thickness of approximately 1.5 mm. Changing the design to a fresnel magnifying lens and decreasing the thickness of the magnifying lens elements to 1.0 mm or less, more preferably between from 0.01 to 0.5 mm, resulted in a clear magnifying lens. For materials which are transparent at greater thicknesses, the magnifying lens can be made either thin or thick, depending on the design of the magnifying lens. For example, for polystyrenes the clarity of the material is not compromised at thicknesses above 1 mm; therefore, a single curve lens comprising polystyrene having a thickness of 1.5 mm could be used on a package. The thickness of the magnifying lens will also be a function of the desired power. It is preferred that the power be between + 8 and + 12 diopters (D), more preferably + 12 D. In the preferred embodiment, the base comprises polypropylene, the base is about 1 mm thick, the magnifying lens lens is on the flange and has a maximum thickness of about 0.5 mm.

Figure 3 shows an alternative embodiment of the package which does not form part of the invention. All the like elements of Figures 1, 2 and 3 are labeled similarly. The package 30 comprises a base 31 and a cover 39. The elements that are not shown in Figure 1 or 2 are the cover 39, and the gripper strips 32 in the grip region 36 of the flange 34. Unlike the package shown in Figures land 2, the magnifying lens 37 is located on the cover 39 of the package shown in Figure 3.

The cover 39 is shown having a rectangular shape having similar dimensions as the base 31 to which it is heat-sealed. The cover 39 has a sealing portion 41, which is sealed to the base 31, and a gripping portion 40 which extends from sealing portion 41, and can be gripped to pull the cover 39 off the base 31. The magnifying lens 37 is shown in the gripping portion 40 of the cover 39. In an alternative embodiment which is not shown, the magnifying lens 37 could be located in the sealing portion 41 of the cover 39, preferably inside the strip 42 of the cover 39 which is sealed to the seal area 34 of the base 31. The cover 39 can comprise any material or materials as long as the magnifying lens or the area of the cover where the magnifying lens is located comprises a transparent material, preferably a transparent plastic material. The magnifying lens, the area on the cover where the magnifying lens is located, or the entire cover can comprise a transparent polymer layer. Examples of suitable transparent cover materials are disclosed and described in EP-A-00301640.9.

The cover can comprise a composite of a non-transparent material and a transparent material. For example, the sealing portion 41 of the cover can comprise a multi-layer foil laminate attached to transparent gripping portion 40. Alternatively the multi-layer foil laminate can have a cut-out into which the magnifying lens is formed or attached. Preferably, in any embodiment, the cover comprises one or more transparent plastic layers, which preferably are over the entire surface of the cover.

The magnifying lens can be any design as long as it increases the size of the identifying indicia when the identifying indicia is viewed through the magnifying lens. For example, the magnifying lens can be a refractive fresnel magnifier, concave-convex design, plano-convex design, meniscus convex, or combinations of these designs. The lens surfaces can be spherical or aspherical. For refractive fresnel design, the segment sags may be equal or unequal. The fresnel design is more suitable for flat portions of the package, such as a flat area of a flange. In the preferred embodiment, the fresnel magnifying lens is present on the flange and comprises 2 to 10, and more preferably 4 to 8 segment sags. The single curve design is well-suitable for the curved area of the package, such as a curved bottom of the recess or a curved portion of a flange. The magnifying power can be controlled by the radii of the curves and the thickness of the material in each magnifying lens design. Although the geometry of the fresnel magnifier is more complex, it is presently preferred. Presently, it is preferred that the magnifying lens is between 10 and 40 mm, more preferably about 25 to 30 mm, in diameter or equivalently sized for differently shaped magnifying lenses. The outside shape of the magnifying lens can be rectangular, oval, polygonal, or any shape.

The magnifying lens is added to the package during its manufacture. The magnifying lens is injection-molded into the base. The base is preferably molded out of a thermoplastic. The base is injection molded between mold forms. The mold forms for injection molding are manufactured to include the magnifying lens. The injection-molding of plastic parts has been disclosed in the art.

According to alternative examples which are not part of the invention, the magnifying lens can be added to the package by any method including the following. The magnifying lens can be molded into the base which can occur at the same time the cover is sealed to the base, by providing, for example, a heated mold form which contacts the base under pressure to cause the base polymer to form the magnifying lens into the base. The cover can be made having the magnifying lens incorporated into the cover by including an already-made magnifying lens. One example of how that might be done is to add the magnifying lens by adding a sticker to a transparent cover layer. The magnifying lens can be added to the cover by stamping the cover between mold forms to provide the magnifying lens, for example, at the time the cover is sealed to the base.

The preferred embodiments have been described herein; however, alternative embodiments would be known to a person of ordinary skill in the art, which would fall within the scope of the invention defined by the claims.

## Claims

1. A non-resealable, disposable package for housing a contact lens comprising a base (11) and a flange (15) **characterised by** said package comprising a magnifying lens (17) wherein said magnifying lens (17) is part of said flange (15), and is formed during injection-moulding said base (11) and said flange, said base (11), said flange and said magnifying lens (17) comprising the same injection-moulded material.

2. The package of claim 1, wherein said magnifying lens (17) is a single curve magnifying lens (17).

3. The package of claim 1 or claim 2, wherein said magnifying lens (17) has a power between from +8 to +12 diopters.

4. A method of making a non-resealable, disposable package for housing a contact lens comprising the step of injection-moulding a material to form at least a base and a flange of said package in a mold form which provides for the formation of a moulded magnifying lens (17) in said molded flange of said package.

5. The method of claim 4, which is used to produce the package of any one of claims 1 to 3.

## Patentansprüche

1. Nicht wiederversiegelbare entsorgbare Verpackung zur Aufnahme einer Kontaktlinse, die eine Basis (11) und einen Flansch (15) umfaßt, **dadurch gekennzeichnet, daß** die Verpakkung eine Vergrößerungslinse (17) umfaßt, wobei die Vergrößerungslinse (17) einen Teil des Flansches (15) bildet und während des Spritzgießens der Basis (11) und des Flansch (15) gebildet wird, wobei die Basis (11), der Flansch (15) und die Vergrößerungslinse (17) dasselbe Spritzgußmaterial umfassen.

2. Verpackung nach Anspruch 1, wobei die Vergrößerungslinse (17) eine Vergrößerungslinse (17) mit einer einzigen Krümmung ist.

3. Verpackung nach Anspruch 1 oder 2, wobei die Vergrößerungslinse (17) eine Brechkraft von +8 bis +12 Dioptrien aufweist.

4. Verfahren zur Herstellung einer nicht wiederversiegelbaren entsorgbaren Verpackung zur Aufnahme einer Kontaktlinse, das den Schritt eines Spritzgießens eines Materials umfaßt, um zumindest eine Basis und einen Flansch der Verpackung in einer Gußform zu bilden, womit die Ausbildung einer gegossenen Vergrößerungslinse (17) in dem gegossenen Flansch der Verpackung gewährleistet wird.

5. Verfahren nach Anspruch 4, welches dazu verwendet wird, die Verpackung nach einem der Ansprüche 1 bis 3 herzustellen.

## Revendications

1. Emballage jetable et non refermable destiné à loger une lentille de contact, comprenant une base (11) et une aile (15), ledit emballage comprenant une lentille grossissante (17), dans lequel ladite lentille grossissante (17) fait partie de ladite aile (15) et est formée pendant le moulage par injection de ladite base (11) et de ladite aile, ladite base (11), ladite aile et ladite lentille grossissante (17) étant constituées du même matériau moulé par injection.

2. Emballage selon la revendication 1, dans lequel ladite lentille grossissante (17) est une lentille grossissante à mono incurvation (17).

3. Emballage selon la revendication 1 ou 2, dans lequel ladite lentille grossissante (17) possède une puissance située entre +8 et +12 dioptries.

4. Procédé de fabrication d'un emballage jetable et non refermable destiné à loger une lentille de contact, comprenant l'étape consistant à mouler par injection un matériau afin de former au moins une base et une aile dudit emballage dans une matrice de moule qui permet la formation d'une lentille grossissante moulée (17) dans ladite aile moulée dudit emballage.

5. Procédé selon la revendication 4, lequel est utilisé pour produire l'emballage selon l'une quelconque des revendications 1 à 3.
